# EUROPÄISCHE PATENTSCHRIFT

(11) **EP 2 005 230 B1**
(45) Veröffentlichungstag und Bekanntmachung des Hinweises auf die Patenterteilung: **07.11.2012**
(21) Anmeldenummer: 07711765.3
(22) Anmeldetag: 03.03.2007
(51) Int. Cl.: G02B 6/44, H02G 15/013

(54) **DICHTUNGSKÖRPER EINER KABELMUFFE**
SEALING BODY FOR A CABLE SLEEVE
CORPS D'ÉTANCHÉITÉ D'UN MANCHON DE CÂBLE

(30) Priorität: 11.04.2006 DE 202006006020 U
(43) Veröffentlichungstag der Anmeldung: 24.12.2008
(73) Patentinhaber: CCS Technology, Inc., Wilmington, DE 19803 (US)
(72) Erfinder: KNORR, Jens, 58791 Werdohl (DE); EICHSTÄDT, Andreas, 58675 Hemer (DE)
(74) Vertreter: Sturm, Christoph
(86) Internationale Anmeldenummer: PCT/EP2007/001841
(87) Internationale Veröffentlichungsnummer: WO 2007/118549

(56) Entgegenhaltungen:
- WO-A-93/26069
- WO-A-96/29760
- WO-A-97/42693
- US-A- 5 789 707
- US-A1- 2005 167 431

## Beschreibung

Die Erfindung betrifft einen Dichtungskörper einer Kabelmuffe nach dem Oberbegriff des Anspruchs 1.

Kabelmuffen zur strukturierten Ablage bzw. Handhabung von in Lichtwellenleiterkabeln geführten Lichtwellenleitem werden in Lichtwellenleiterkabelnetzen zum Schutz von Spleißverbindungen an Verbindungs.stellen von zwei Lichtwellenleiterkabeln sowie zum Schutz der Lichtwellenleiter an Abzweigstellen oder an Aufteilungsstellen von Lichtwellenleiterkabeln verwendet. Dabei müssen die Kabelmuffen die Kontinuität der Lichtwellenleiterkabel so gewährleisten, als wären die Lichtwellenleiterkabel nicht unterbrochen. Der strukturierten Ablage und schonenden Handhabung der Lichtwellenleiter kommt hierbei eine entscheidenden Rolle zu, damit die Übertragungseigenschaften der Lichtwellenleiter nicht negativ beeinträchtigt werden.

Aus der EP 0 646 294 B1 ist Kabelmuffe bekannt, die einen Abdeckkörper sowie einen in eine Öffnung des Abdeckkörpers einführbaren Dichtungskörper aufweiset, wobei der Dichtungskörper ein gelartiges Dichtungsmaterial umfasst, welches zwischen zwei formstabilen Platten angeordnet ist. Der Dichtungskörper ist in einem Hohlraum in Axialrichtung nach innen und außen in Bezug auf den Abdeckkörper verschiebbar, um Druckunterschiede zwischen einem Innendruck und Außendruck der Kabelmuffe auszugleichen. Abhängig von diesem Druckunterschied kommt der Dichtungskörper dabei an unterschiedlichen Anschlägen zur Anlage.

Die EP 0 442 941 B1 offenbart ebenfalls eine Kabelmuffe mit einem Abdeckkörper und einem in eine Öffnung des Abdeckkörpers eingeführten Dichtungskörper. Der in Fig. 28 A, 28 B der EP 0 442 941 B1 gezeigte Dichtungskörper umfasst ein gelartiges Dichtungselement, welches an zwei sich gegenüberliegenden Seiten von jeweils einem formstabilen Endstück begrenzt ist. Durch das gelartige Dichtungselement erstreckt sich ein als Verstellschraube ausgebildetes Druckelement, über welches auf die formstabiles Endstücke eine Kraft ausgeübt werden kann, um das gelartige Dichtungselement zu komprimieren und so dasselbe gegen ein Kabel, welches in eine Kabeleinführungsöffnung des Dichtungselements eingelegt ist, unter Abdichtung desselben zu drücken. Um während der gesamten Betriebsdauer der Kabelmuffe die Dichtfunktion des gelartigen Dichtungselements aufrechtzuerhalten, wird über das Druckelement ein als Feder ausgebildetes Kompensationselement komprimiert, welches z.B. durch Temperaturwechsel verursachte Änderungen des Werkstoffverhaltens des gelartigen Dichtungselements kompensieren kann. Schrumpft z.B. bei geringen Temperaturen das gelartige Dichtungselement stärker als die übrigen Baugruppen des Dichtungskörpers, so kann die Dichtungswirkung des gelartigen Dichtungselements im Bereich einer Kabeleinführungsöffnung dennoch aufrechterhalten werden, da das als Feder ausgebildete Kompensationselement das gelartige Dichtungselement unter einem ausreichenden Kompressionsdruck hält.

Ein Dichtungskörper einer Kabelmuffe gemäß dem Oberbegriff des Anspruchs 1 ist weiterhin aus der WO 93/26069 A bekannt.

US 2005/167431 A1 zeigt einen Dichtungskörper mit in ein gelartiges Dichtungselement eingelagerten thermoplastischen Mikrokugeln.

Weitere Dichtungskörper sind aus WO 97/42693 A und wo 96/29760 A bekannt.

Hiervon ausgehend liegt der vorliegenden Erfindung das Problem zu Grunde, einen neuartigen Dichtungskörper einer Kabelmuffe zu schaffen.

Dieses Problem wird dadurch gelöst, dass der Eingangs genannte Dichtungskörper durch die Merkmale des kennzeichnenden Teils des Anspruchs 1 weitergebildet ist.

Im Sinne der hier vorliegenden Erfindung ist das oder jedes Kompensationselement, durch welches sich im Betrieb einstellende Änderungen des Werkstoffverhaltens des gelartigen Dichtungselements kompensiert werden kann, als in das gelartige Dichtungselement eingefagertes und zylinderartigs Elastomerelement ausgebildet. Eine Längsmittelachsee des oder jedes Kompensationselements erstreckt sich senkrecht zu einer Längsmittelachse der Kabeleinführungsöffnung. Auf die nach dem Stand der Technik als Kompensationselemente verwendeten Federn kann verzichtet werden, wodurch sich der konstruktive Aufbau des erfindungsgemäßen Dichtungskörpers vereinfacht.

Nach einer vorteilhaften Weiterbildung der Erfindung ist das oder jedes Kompensationselement benachbart zu einer in das gelartige Dichtungselement eingebrachten Kabeleinführungsöffnung angeordnet, wobei das oder jedes Kompensationselement zylinderartig ausgeführt ist, und wobei sich eine Längsmittelachse des oder jedes Kompensationselements senkrecht zu einer Längsmittelachse einer in das gelartige Dichtungselement eingebrachten Kabeleinführungsöffnung erstreckt.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, anhand der Zeichnung näher erläutert. In der Zeichnung zeigt:
- Fig. 1:: einen Dichtungskörper in teilweiser perspektivischer Expfosionsansicht, und
- Fig. 2:: ein Dichtungskörpersegment des Dichtungskörpers der Fig. 1 in Alleindarstellung in perspektivischer Ansicht.

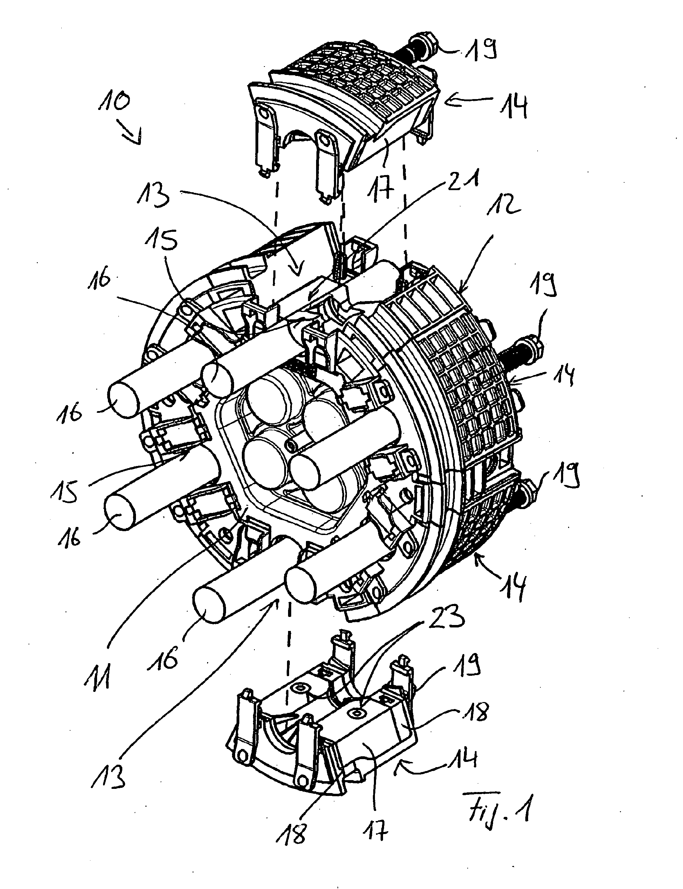

Fig. 1 zeigt ein bevorzugtes Ausführungsbeispiel eines erfindungsgemäßen Dichtungskörpers 10 einer Kabelmuffe, wobei im gezeigten Ausführungsbeispiel der Dichtungskörper 10 ein mittleres Dichtungskörpersegment 11 sowie in eine äußere Mantelfläche 12 des mittleren Dichtungskörpersegments 11 eingebrachte Ausnehmungen 13 einführbare zylindersegmentartige Dichtungskörpersegmente 14 umfasst.

Im gezeigten Ausführungsbeispiel der Fig. 1 sind in die äußere Mantelfläche 12 des mittleren Dichtungskörpersegments 11 insgesamt sechs Ausnehmungen 13 eingebracht, wobei in jede der Ausnehmungen 13 ein zylindersegmentartiges Dichtungskörpersegment 14 einführbar ist. Gemäß Fig. 1 sind die zylindersegmentartigen Dichtungskörpersegmente 14 in radialer Richtung des mittleren Dichtungskörpersegments 11 in die Ausnehmungen 13 desselben einführbar.

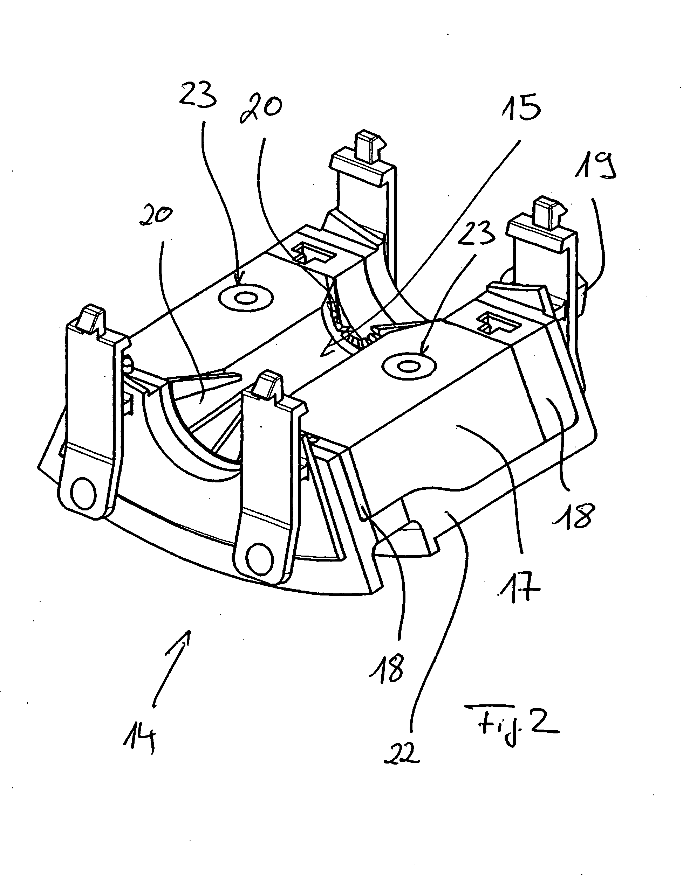

Gemäß Fig. 1 und 2 ist im Bereich jeder Ausnehmung 13 und damit jedes zylindersegmentartigen Dichtungskörpersegments 14 eine Kabeleinführungsöffnung 15 zur Abdichtung eines Kabels 16 ausgebildet. Mit jedem zylindersegmentartigen Dichtungskörpersegment 14 kann demnach ein Kabel 16 in der entsprechenden Kabeleinführungsöffnung 15 individuell abgedichtet werden.

Im gezeigten Ausführungsbeispiel verfügt jedes zylindersegmentartige Dichtungskörpersegment 14 (siehe insbesondere Fig. 2) über ein gelartiges Dichtungselement 17, welches an zwei sich gegenüberliegenden Seiten von jeweils einem formstabilen, als Federscheibe 18 ausgebildeten Endstück begrenzt ist. Im gezeigten Ausführungsbeispiel ist auf eines der beiden Endstücke 18 über ein Druckelement 19 eine Kraft ausübbar, um das gelartige Dichtungselement 17 des Dichtungskörpersegments 14 zu komprimieren. Hierbei wird dann das gelartige Dichtungselement 17 gegen ein in die entsprechende Kabeleinführungsöffnung 15 eingelegtes Kabel 16 gedrückt, um dasselbe im Bereich der Kabeleinführungsöffnung 15 abzudichten. An den Federscheiben 18 angeordnete Federelemente 20 zentrieren dabei das Kabel 16 und verhindern, dass das gelartige Dichtungselement 17 beim Komprimieren nach außen gedrückt wird.

Jedes gelartige Dichtungselement 17 eines zylindersegmentartigen Dichtungskörpersegments 14 wirkt mit einem in der entsprechenden Ausnehmung 13 des mittleren Dichtungskörpersegments 11 angeordneten, gelartigen Dichtungskörperelement 21 zusammen.

Gemäß Fig. 2 sind das gelartige Dichtungselement 17 sowie die formstabilen, als Federscheiben 18 ausgebildeten Endstücke eines zylindersegmentartigen Dichtungskörpersegments 14 in einem Gehäuse 22 des jeweiligen zylindersegmentartigen Dichtungskörpersegments 14 angeordnet. Beim Komprimieren des gelartigen Dichtungselements 17 mit Hilfe des Druckelements 19 wird das formstabile Endstück 18, an welchem das Druckelement 19 angreift, gegen das andere formstabile Endstück 18 gedrückt, wodurch sich hierdurch der Abstand zwischen den beiden formstabilen Endstücken 18 verringert und letztendlich das gelartige Dichtungselement 17 komprimiert wird. Hierdurch wird die Abdichtung eines in eine Kabeleinführungsöffnung 15 eingelegten Kabels 16 bewirkt.

Während des Betriebs des Dichtungskörpers 10 bzw. einer den Dichtungskörper 10 aufweisenden Kabelmuffe können sich die Werkstoffeigenschaften des gelartigen Dichtungselements 17 eines jeden zylindersegmentartigen Dichtungskörpersegments 14 verändern. Insbesondere ist festzustellen, dass bei niedrigen Temperaturen gelartige Dichtungselemente einer stärken Schrumpfung unterliegen als die übrigen Baugruppen von Dichtungskörpersegmenten, sodass unter Umständen eine ausreichende Abdichtung eines in eine Kabeleinführungsöffnung 15 eingelegten Kabels 16 nicht mehr aufrechterhalten werden kann. Um solche z.B. durch Temperaturwechsel verursachte Änderungen des Werkstoffverhaltens von gelartigen Dichtungselementen zu kompensieren, ist denselben mindestens ein Kompensationselement 23 zugeordnet, welche die Dichtwirkung der gelartigen Dichtungselemente 17 aufrecht erhalten. Im Sinne der hier vorliegenden Erfindung ist das oder jedes Kompensationselement 23 als ein Elastomerelement ausgebildet, welches in das jeweilige gelartige Dichtungselement 17 des jeweiligen Dichtungskörpersegments 14 eingelagert ist.

Im in Fig. 2 gezeigten Ausführungsbeispiel sind in das gelartige Dichtungselement 17 jedes zylindersegmentartigen Dichtungskörpersegments 14 zwei Kompensationselemente 23 eingelagert bzw. eingebettet, wobei dieselben benachbart zur Kabeleinführungsöffnung 15 des gelartigen Dichtungselements 17 positioniert sind.

Gemäß Fig. 2 sind die beiden Kompensationselemente 23 dabei in etwa in der Mitte zwischen den beiden formstabilen, als Federscheiben 18 ausgebildeten Endstücken angeordnet.

Bereits an dieser Stelle sei darauf hingewiesen, dass die Anzahl sowie die konkrete Anordnung der in Fig. 2 gezeigten Kompensationselemente 23 rein exemplarisch ist. So kann es unter Umständen ausreichend sein, lediglich ein einziges Kompensationselement 23 zu einer Seite einer Kabeleinführungsöffnung 15 anzuordnen. Des Weiteren können auch mehr als zwei Kompensationselemente 23 in das gelartige Dichtungselement 17 eingelagert bzw. eingebettet sein, die dann vorzugsweise zu beiden Seiten der entsprechenden Kabeleinführungsöffnung 15 in Längsrichtung der Kabeleinführungsöffnung 15 gesehen hintereinander angeordnet sind.

Wie in der Fig. 2 gezeigt sind die Kompensationselemente 23 zylinderartig ausgeführt, wobei sich eine Längsmittelachse der zylinderartigen Kompensationselemente 23 senkrecht zur Längsmittelachse der Kabeleinführungsöffnung 15 erstreckt, ohne jedoch die Kabeleinführungsöffnung 15 zu schneiden.

Die als Elastomerelemente ausgebildeten Kompensationselemente 23 unterliegen selbst bei geringen Temperaturen tief unterhalb des Gefrierpunkts so gut wie keiner Schrumpfung, wobei elastische Eigenschaften derselben so gut wie unverändert bleiben. Unterliegt demnach bei geringen Temperaturen das gelartige Dichtungselement 17 einer Schrumpfung, so üben die als Elastomerelemente ausgebildeten Kompensationselemente 23 auf das gelartige Dichtungselement 17 einen Druck aus, durch welches die Abdichtung eines Kabels im Bereich der Kabeleinführungsöffnung 15 und damit die Dichtwirkung des gelartigen Dichtungselements 17 aufrechterhalten werden kann.

Vorzugsweise sind die in Fig. 2 dargestellten Kompensationselemente 23 aus einem thermoplastischen Elastomer, kurz TPE genannt, ausgebildet. Als thermoplastisches Elastomer ist insbesondere thermoplastisches Polyuretan, kurz TPU bzw. PUR, geeignet. Ebenso ist es möglich, die Kompensationselemente 23 aus einem terpolymeren Elastomer herzustellen, so z. B. aus Ethylen-Propylen-Kautschuk, kurz EPM genannt, oder aus Ethylen-Propylen-Dien-Kautschuk, kurz EPDM genannt. Weiterhin ist es möglich, die Kompensationselemente 23 aus einem Silikon-Elastomer auszubilden.

Im Sinne der hier vorliegenden Erfindung können derartige Kompensationselemente auch den gelartigen Dichtungselementen 21 des mittleren Dichtungskörpersegments 11 zugeordnet sein. Obwohl die Erfindung bevorzugt bei dem in Fig. 1 dargestellten Dichtungskörper 10 Verwendung findet, kann dieselbe auch bei jedem anderen Dichtungskörper eingesetzt werden, der über mindestens ein gelartiges Dichtungselement verfügt.

### Bezugszeichenliste

- 10: Dichtungskörper
- 11: mittleres Dichtungskörpersegment
- 12: Mantelfläche
- 13: Ausnehmung
- 14: zylindersegmentartiges Dichtungskörpersegment
- 15: Kabeleinführungsöffnung
- 16: Kabel
- 17: gelartiges Dichtungselement
- 18: Federscheibe
- 19: Druckelement
- 20: Federelement
- 21: gelartiges Dichtungselement
- 22: Gehäuse
- 23: Kompensationselement

## Patentansprüche

1. Dichtungskörper einer Kabelmuffe, mit mindestens einem Dichtungskörpersegment (14), wobei das oder jedes Dichtungskörpersegment ein gelartiges Dichtungselement (17) umfasst, wobei das gelartige Dichtungselement durch Aufbringen einer Kraft mittels mindestens eines Druckelements (19) auf mindestens ein formstabiles, das gelartige Dichtungselement an einer Seite begrenzendes Endstück komprimierbar ist, und wobei insbesondere durch Temperaturwechsel verursachte Änderungen des Werkstoffverhaltens des gelartigen Dichtungselements durch mindestens ein Kompensationselement (23) zur Aufrechterhaltung der Dichtwirkung des gelartigen Dichtungselements kompensierbar sind, **dadurch gekennzeichnet,**
**dass** das oder jedes Kompensationselement (23) als ein in das gelartige Dichtungselement (17) eingelagertes bzw. eingebettetes Elastomerelement ausgebildet ist, und dass das oder jedes Kompensationselement (23) zylinderartig ausgeführt ist, wobei sich eine Längsmittelachse des oder jedes Kompensationselements (23) senkrecht zu einer Längsmittelachse einer in das gelartige Dichtungselement (17) eingebrachten Kabeleinführungsöffnung (15) erstreckt.

2. Dichtungskörper nach Anspruch 1, **dadurch gekennzeichnet, dass** das oder jedes Kompensationselement (23) aus einem thermoplastischen Elastomer TPE gebildet ist.

3. Dichtungskörper nach Anspruch 2, **dadurch gekennzeichnet, dass** das oder jedes Kompensationselement (23) aus thermoplastischem Polyuretan TPU gebildet ist.

4. Dichtungskörper nach Anspruch 1, **dadurch gekennzeichnet, dass** das oder jedes Kompensationselement (23) aus einem terpolymeren Elastomer gebildet ist.

5. Dichtungskörper nach Anspruch 4, **dadurch gekennzeichnet, dass** das oder jedes Kompensationselement (23) aus Ethylen-Propylen-Kautschuk EPM oder aus Ethylen-Propylen-Dien-Kautschuk EPDM gebildet ist.

6. Dichtungskörper nach Anspruch 1, **dadurch gekennzeichnet, dass** das oder jedes Kompensationselement (23) aus einem Silikon-Elastomer gebildet ist.

7. Dichtungskörper nach einem oder mehreren der Ansprüche 1 bis 6, **dadurch gekennzeichnet, dass** das oder jedes Kompensationselement (23) benachbart zu einer in das gelartige Dichtungselement (17) eingebrachten Kabeleinführungsöffnung (15) angeordnet ist.

8. Dichtungskörper nach einem oder mehreren der Ansprüche 1 bis 7, **dadurch gekennzeichnet, dass** zu jeder Seite einer in das gelartige Dichtungselement (17) eingebrachten Kabeleinführungsöffnung (15) jeweils mindestens ein Kompensationselement (23) angeordnet ist.

9. Dichtungskörper nach einem oder mehreren der Ansprüche 1 bis 8, **dadurch gekennzeichnet, dass** das gelartige Dichtungselement (17) an zwei sich gegenüberliegenden Seiten von einem formstabilen Endstück (23) begrenzt ist, wobei sich mindestens eine Kabeleinführungsöffnung (15) durch das gelartige Dichtungselement (17) und die formstabilen Endstücke (18) erstreckt, und wobei das oder jedes Kompensationselement (23) in etwa in der Mitte zwischen den formstabilen Endstücken (18) benachbart zu einer Kabeleinführungsöffnung (15) in das gelartige Dichtungselement (17) eingelagert ist.

## Claims

1. Sealing body for a cable sleeve having at least one sealing body segment (14), wherein the or each sealing body segment comprises a gel-like sealing element (17), wherein the gel-like sealing element can be compressed by applying a force by means of at least one pressure element (19) to at least one dimensionally stable end piece that borders one side of the gel-like sealing element, and wherein alterations in the material behavior of the gel-like sealing element caused in particular by temperature fluctuations can be compensated by at least one compensation element (23) for maintaining the sealing action of the gel-like sealing element, **characterized in that** the or each compensation element (23) is embodied as an elastomer element that is inlaid or embedded in the gel-like sealing element (17), and **in that** the or each compensation element (23) is designed in the form of a cylinder, a longitudinal center axis of the or each compensation element (23) extending perpendicular to a longitudinal central axis of a cable entry opening (15) made in the gel-like sealing element (17).

2. Sealing body according to Claim 1, **characterized in that** the or each compensation element (23) is formed from a thermoplastic elastomer TPE.

3. Sealing body according to Claim 2, **characterized in that** the or each compensation element (23) is formed from a thermoplastic polyurethane TPU.

4. Sealing body according to Claim 1, **characterized in that** the or each compensation element (23) is formed from a terpolymer elastomer.

5. Sealing body according to Claim 4, **characterized in that** the or each compensation element (23) is formed from ethylene propylene rubber EPM or from ethylene propylene diene monomer EPDM.

6. Sealing body according to Claim 1, **characterized in that** the or each compensation element (23) is formed from a silicone elastomer.

7. Sealing body according to one or more of Claims 1 to 6, **characterized in that** the or each compensation element (23) is arranged adjacent to a cable entry opening (15) made in the gel-like sealing element (17).

8. Sealing body according to one or more of Claims 1 to 7, **characterized in that** at least one compensation element (23) is arranged on either side of a cable entry opening (15) made in the gel-like sealing element (17).

9. Sealing body according to one or more of Claims 1 to 8, **characterized in that** the gel-like sealing element (17) is bordered on two opposite sides by a dimensionally stable end piece (18), wherein at least one cable entry opening (15) extends through the gel-like sealing element (17) and the dimensionally stable end pieces (18), and wherein the or each compensation element (23) is inlaid in the gel-like sealing element (17) approximately centrally between the dimensionally stable end pieces (18) adjacent to a cable entry opening (15).

## Revendications

1. Corps d'étanchéité d'un manchon de câble, avec au moins un segment de corps d'étanchéité (14), dans lequel le ou chaque segment de corps d'étanchéité comprend un élément d'étanchéité de type gel (17), dans lequel l'élément d'étanchéité de type gel peut être comprimé par l'application d'une force au moyen d'au moins un élément de pression (19) sur au moins une pièce d'extrémité de forme stable limitant sur un côté l'élément d'étanchéité de type gel, et dans lequel des modifications du comportement de matériau de l'élément d'étanchéité de type gel provoquées en particulier par un changement de température peuvent être compensées au moyen d'au moins un élément de compensation (23) afin de maintenir l'effet d'étanchéité de l'élément d'étanchéité de type gel, **caractérisé en ce que** le ou chaque élément de compensation (23) se présente sous la forme d'un élément élastomère incorporé ou noyé dans l'élément d'étanchéité de type gel (17), et **en ce que** le ou chaque élément de compensation (23) est réalisé en forme de cylindre, dans lequel un axe longitudinal central du ou de chaque élément de compensation (23) s'étend perpendiculairement à un axe longitudinal central d'une ouverture d'introduction de câble (15) pratiquée dans l'élément d'étanchéité de type gel (17).

2. Corps d'étanchéité selon la revendication 1, **caractérisé en ce que** le ou chaque élément de compensation (23) est formé d'un élastomère thermoplastique ETP.

3. Corps d'étanchéité selon la revendication 2, **caractérisé en ce que** le ou chaque élément de compensation (23) est formé de polyuréthane thermoplastique PUT.

4. Corps d'étanchéité selon la revendication 1, **caractérisé en ce que** le ou chaque élément de compensation (23) est formé d'un élastomère terpolymère.

5. Corps d'étanchéité selon la revendication 4, **caractérisé en ce que** le ou chaque élément de compensation (23) est formé de caoutchouc éthylène-propylène EPM ou de caoutchouc éthylène-propylène-diène EPDM.

6. Corps d'étanchéité selon la revendication 1, **caractérisé en ce que** le ou chaque élément de compensation (23) est formé d'un élastomère silicone.

7. Corps d'étanchéité selon une ou plusieurs des revendications 1 à 6, **caractérisé en ce que** le ou chaque élément de compensation (23) est disposé à proximité d'une ouverture d'introduction de câble (15) pratiquée dans l'élément d'étanchéité de type gel (17).

8. Corps d'étanchéité selon une ou plusieurs des revendications 1 à 7, **caractérisé en ce qu'**au moins un élément de compensation (23) est chaque fois disposé sur chaque côté d'une ouverture d'introduction de câble (15) pratiquée dans l'élément d'étanchéité de type gel (17).

9. Corps d'étanchéité selon une ou plusieurs des revendications 1 à 8, **caractérisé en ce que** l'élément d'étanchéité de type gel (17) est limité sur deux côtés opposés par une pièce d'extrémité de forme stable (18), dans lequel au moins une ouverture d'introduction de câble (15) s'étend à travers l'élément d'étanchéité de type gel (17) et les pièces d'extrémité de forme stable (18), et dans lequel le ou chaque élément de compensation (23) est incorporé dans l'élément d'étanchéité de type gel (17) sensiblement au milieu entre les pièces d'extrémité de forme stable (18) à proximité d'une ouverture d'introduction de câble (15).
